(19)

Europäisches Patentamt
European Patent Office
Office européen des brevets

(11)  **EP 4 498 338 A1**

(12)  **EUROPEAN PATENT APPLICATION**
published in accordance with Art. 153(4) EPC

(43) Date of publication:
**29.01.2025  Bulletin 2025/05**

(21) Application number: **22932982.6**

(22) Date of filing: **05.09.2022**

(51) International Patent Classification (IPC):
**G06V 20/62** (2022.01)

(86) International application number:
**PCT/CN2022/117003**

(87) International publication number:
**WO 2023/178930 (28.09.2023 Gazette 2023/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **23.03.2022  CN 202210291917**

(71) Applicant: **Beijing Jingdong Qianshi Technology
Co., Ltd.
Beijing 100176 (CN)**

(72) Inventors:
• **SHENG, Jielai
  Beijing 100176 (CN)**
• **LIU, Yang
  Beijing 100176 (CN)**
• **GUO, Mingjie
  Beijing 100176 (CN)**

(74) Representative: **Witte, Weller & Partner
Patentanwälte mbB
Postfach 10 54 62
70047 Stuttgart (DE)**

(54)  **IMAGE RECOGNITION METHOD AND APPARATUS, TRAINING METHOD AND APPARATUS, SYSTEM, AND STORAGE MEDIUM**

(57)    The present disclosure provides an image recognition method and an image recognition apparatus, suitable for fields of artificial intelligence and the Internet of Things technologies. The image recognition method includes: recording a vehicle identification of a vehicle entering an operating site from an entrance of the operating site, so as to obtain a set of vehicle identifications including one or more vehicle identifications; acquiring an image information to be processed of a vehicle operating around an operating platform, where the operating platform is located in the operating site; and recognizing a target vehicle identification of a target vehicle in the image information to be processed according to a predicted matching result between the image information to be processed and the vehicle identification in the set of vehicle identifications. The present disclosure further provides a method of training an image recognition model, an apparatus of training an image recognition model, a computer system, a computer-readable storage medium, and a computer program product.

```
                                                    ┌─── S210
┌──────────────────────────────────────┐
│ A vehicle identification of a vehicle entering an │
│ operating site from an entrance of the operating site │
│ is recorded, so as to obtain a set of vehicle │
│ identifications including one or more vehicle │
│ identifications │
└──────────────────────────────────────┘
                      │
                      ▼                             ┌─── S220
┌──────────────────────────────────────┐
│ An image information to be processed of a vehicle │
│ operating around an operating platform is acquired, │
│ where the operating platform is located in the │
│ operating site │
└──────────────────────────────────────┘
                      │
                      ▼                             ┌─── S230
┌──────────────────────────────────────┐
│ According to a predicted matching result between │
│ the image information to be processed and the │
│ vehicle identification in the set of vehicle │
│ identifications, a target vehicle identification of a │
│ target vehicle in the image information to be │
│ processed is recognized │
└──────────────────────────────────────┘
```

FIG. 2

**Description**

CROSS REFERENCE TO RELATED APPLICATION

This application claims priority to Chinese Patent Application No. 202210291917.6, filed with CNIPA on March 23, 2022, and entitled "IMAGE RECOGNITION METHOD AND APPARATUS, TRAINING METHOD AND APPARATUS, SYSTEM, AND STORAGE MEDIUM", the entire content of which is incorporated herein in its entirety by reference.

TECHNICAL FIELD

The present disclosure relates to fields of artificial intelligence technology and the Internet of Things technology, and in particular, to an image recognition method, an image recognition apparatus, a training method, a training apparatus, a computer system, a computer-readable storage medium, and a computer program product.

BACKGROUND

Acquiring image information such as videos and images through a camera apparatus and processing the image information using the image recognition technology to quickly recognize text information in the image information is widely used in multiple application scenarios such as transportation, warehousing, and logistics. For example, a vehicle that violates traffic rules may be determined by capturing image information of the vehicle travelling on a highway and recognizing a license plate of the vehicle in the image information.
In a process of implementing the concept of the present disclosure, the inventor has discovered at least the following technical problems in the related art: defects in the image information such as image blurring or missing image information may lead to errors in the text information recognized from the image information.

SUMMARY

In view of this, the present disclosure provides an image recognition method, an image recognition apparatus, a training method, a training apparatus, a computer system, a computer-readable storage medium, and a computer program product.
An aspect of the present disclosure provides an image recognition method, including: recording a vehicle identification of a vehicle entering an operating site from an entrance of the operating site, so as to obtain a set of vehicle identifications including one or more vehicle identifications; acquiring an image information to be processed of a vehicle operating around an operating platform, where the operating platform is located in the operating site; and recognizing a target vehicle identification of a target vehicle in the image information to be processed, according to a predicted matching result between the image information to be processed and the vehicle identification in the set of vehicle identifications.
According to an embodiment of the present disclosure, the recognizing a target vehicle identification of a target vehicle in the image information to be processed according to a predicted matching result between the image information to be processed and the vehicle identification in the set of vehicle identifications includes: performing an image feature extraction on the image information to be processed to obtain an image feature vector, where a target information is recorded in the image information to be processed; performing a text feature extraction on the vehicle identification in the set of vehicle identifications to obtain a text feature vector; fusing the image feature vector with the text feature vector based on an attention mechanism, so as to obtain an image weighted feature vector for the image information to be processed; determining the predicted matching result for the image information to be processed based on the image weighted feature vector and the text feature vector; and recognizing the target information in the image information to be processed as the target vehicle identification, in response to the predicted matching result indicating that the image information to be processed is matched with the vehicle identification.
According to an embodiment of the present disclosure, the performing an image feature extraction on the image information to be processed to obtain an image feature vector includes: inputting the image information to be processed to a first image feature extraction layer, so as to extract an image feature of the image information to be processed in a first direction and output a first image feature vector; and inputting the image information to be processed to a second image feature extraction layer, so as to extract an image feature of the image information to be processed in a second direction and output a second image feature vector. The image feature vector includes the first image feature vector and the second image feature vector, and the first direction is perpendicular to the second direction.
According to an embodiment of the present disclosure, the fusing the image feature vector with the text feature vector based on an attention mechanism so as to obtain an image weighted feature vector for the image information to be processed includes: inputting the first image feature vector and the text feature vector into a first attention layer, so as to output a first image weighted feature vector; and inputting the second image feature vector and the text feature vector into a second attention layer, so as to output a second image weighted feature vector. The image weighted feature vector includes the first image weighted feature vector and the second image weighted feature vector.

According to an embodiment of the present disclosure, the determining the predicted matching result for the image information to be processed based on the image weighted feature vector and the text feature vector includes: fusing and encoding the image weighted feature vector and the text feature vector to generate a predicted input vector; and inputting the predicted input vector into a prediction classification layer, so as to output the predicted matching result for the image information to be processed.

According to an embodiment of the present disclosure, the performing a text feature extraction on the vehicle identification in the set of vehicle identifications to obtain a text feature vector includes: inputting the vehicle identification in the set of vehicle identifications into a text feature extraction layer, so as to output the text feature vector.

According to an embodiment of the present disclosure, the performing a text feature extraction on the vehicle identification in the set of vehicle identifications to obtain a text feature vector further includes: completing the vehicle identification so that a number of characters in the vehicle identification meets a preset rule, before inputting the vehicle identification into the text feature extraction layer.

According to an embodiment of the present disclosure, the recording a vehicle identification of a vehicle entering an operating site from an entrance of the operating site so as to obtain a set of vehicle identifications including one or more vehicle identifications includes: acquiring a vehicle image information of the vehicle entering the operating site from the entrance of the operating site; determining the vehicle identification of the vehicle entering the operating site from the entrance of the operating site according to the vehicle image information; and determining the set of vehicle identifications according to the vehicle identification of the vehicle entering the operating site from the entrance of the operating site.

Another aspect of the present disclosure provides a method of training an image recognition model, including: acquiring a training sample, where the training sample includes a sample image information to be processed, a sample vehicle identification, and a label corresponding to the sample image information to be processed; and training an initial image recognition model using the training sample, so as to obtain a trained image recognition model. The image recognition model is configured to implement the image recognition method described above.

Another aspect of the present disclosure provides an image recognition apparatus, including: a record module configured to record a vehicle identification of a vehicle entering an operating site from an entrance of the operating site, so as to obtain a set of vehicle identifications including one or more vehicle identifications; an acquisition module configured to acquire an image information to be processed of a vehicle operating around an operating platform, where the operating platform is located in the operating site; and a recognition module configured to recognize a target vehicle identification of a target vehicle in the image information to be processed, according to a predicted matching result between the image information to be processed and the vehicle identification in the set of vehicle identifications.

Another aspect of the present disclosure provides an apparatus of training an image recognition model, including: a sample acquisition module configured to acquire a training sample, where the training sample includes a sample image information to be processed, a sample vehicle identification, and a label corresponding to the sample image information to be processed; and a training module configured to train an initial image recognition model using the training sample, so as to obtain a trained image recognition model. The image recognition model is configured to implement the image recognition method described above .

Another aspect of the present disclosure provides a computer system, including: one or more processors; and a memory configured to store one or more programs, where the one or more programs, when executed by the one or more processors, are configured to cause the one or more processors to implement the above recognition method of embodiments of the present disclosure, or implement the above training method of embodiments of the present disclosure.

Another aspect of the present disclosure provides a computer-readable storage medium having executable instructions stored thereon, where the instructions, when executed by a processor, are configured to cause the processor to implement the above recognition method of embodiments of the present disclosure, or implement the above training method of embodiments of the present disclosure.

Another aspect of the present disclosure provides a computer program product including a computer program, where the computer program, when executed by a processor, is configured to implement the above recognition method of embodiments of the present disclosure, or implement the above training method of embodiments of the present disclosure.

BRIEF DESCRIPTION OF THE DRAWINGS

Through the following description of embodiments of the present disclosure with reference to the drawings, the above and other objectives, features and advantages of the present disclosure will be more clear. In the drawings:

FIG. 1 schematically shows an exemplary system architecture to which an image recognition method and an image recognition apparatus of the present disclosure are applied;

FIG. 2 schematically shows a flowchart of an image recognition method according to an embodiment of the present disclosure;

FIG. 3A schematically shows a flowchart of recognizing, according to a predicted matching result between an image information to be processed and a vehicle identification in a set of vehicle identifications, a target vehicle identification of a target vehicle in the image information to be processed, according to an embodiment of the present disclosure;

FIG. 3B schematically shows an application scenario diagram of performing an image feature extraction on an image information to be processed according to an embodiment of the present disclosure;

FIG. 3C schematically shows another application scenario diagram of performing an image feature extraction on an image information to be processed according to an embodiment of the present disclosure;

FIG. 4 schematically shows an application scenario diagram of an image recognition method according to an embodiment of the present disclosure;

FIG. 5 schematically shows a flowchart of a method of training an image recognition model according to an embodiment of the present disclosure;

FIG. 6 schematically shows a block diagram of an image recognition apparatus according to an embodiment of the present disclosure;

FIG. 7 schematically shows a block diagram of an apparatus of training an image recognition model according to an embodiment of the present disclosure; and

FIG. 8 schematically shows a block diagram of an electronic device for implementing a method provided by an embodiment of the present disclosure according to an embodiment of the present disclosure.

DETAILED DESCRIPTION OF EMBODIMENTS

Hereinafter, embodiments of the present disclosure will be described with reference to the drawings. However, it should be understood that these descriptions are only exemplary, and are not intended to limit the scope of the present disclosure. In the following detailed description, for ease of explanation, many specific details are set forth to provide a comprehensive understanding of embodiments of the present disclosure. However, clearly, one or more embodiments may also be implemented without these specific details. In addition, in the following description, descriptions of well-known structures and technologies are omitted to avoid unnecessarily obscuring the concept of the present disclosure.

The terms used here are only for describing specific embodiments, and are not intended to limit the present disclosure. The terms "include", "comprise", etc. used herein indicate an existence of described characteristics, steps, operations and/or components, but do not exclude a presence or addition of one or more other characteristics, steps, operations or components.

Unless otherwise defined, all terms (including technical and scientific terms) used herein have the meanings commonly understood by those skilled in the art. It should be noted that the terms used here should be interpreted as having meanings consistent with the context of the specification, and should not be interpreted in an idealized or overly rigid manner.

In the case of using an expression similar to "at least one of A, B or C, etc.", generally speaking, it should be interpreted according to the meaning of the expression commonly understood by those skilled in the art (for example, "a system having at least one of A, B, or C" shall include, but is not limited to, a system having A alone, B alone, C alone, A and B, A and C, B and C, and/or A, B and C, etc.).

Embodiments of the present disclosure provide an image recognition method, an image recognition apparatus, a training method, a training apparatus, a computer system, a computer-readable storage medium, and a computer program product. The image recognition method includes: recording a vehicle identification of a vehicle entering an operating site from an entrance of the operating site, so as to obtain a set of vehicle identifications including one or more vehicle identifications; acquiring an image information to be processed of a vehicle operating around an operating platform, where the operating platform is located in the operating site; and recognizing a target vehicle identification of a target vehicle in the image information to be processed, according to a predicted matching result between the image information to be processed and the vehicle identification in the set of vehicle identifications.

According to an embodiment of the present disclosure, by recording a vehicle identification of a vehicle entering an operating site from an entrance of the operating site to obtain a set of identifications of vehicles entering the operating site, acquiring image information to be processed of a vehicle operating around an operating platform, and recognizing a target vehicle identification of a target vehicle in the image information to be processed according to a predicted matching result between the image information to be processed and the vehicle identification in the set of the identifications of the vehicles entering the operating site, the technical problem of low accuracy or even inability to recognize the vehicle identification due to unclear image information to be processed or contamination of the vehicle identification in the image information to be processed in the related art may be at least partially alleviated, thereby reducing errors in vehicle identification recognition, improving the accuracy of vehicle identification recognition, and improving the level of intelligent management for the vehicles entering the operating site for operating.

In the technical solution of the present disclosure, the acquisition, storage, and application of user personal information involved comply with relevant laws and regulations, necessary confidentiality measures have been taken, and do not violate public order and good customs.

In the technical solution of the present disclosure, authorization or consent has been acquired from the user before acquiring or acquiring the user personal information.

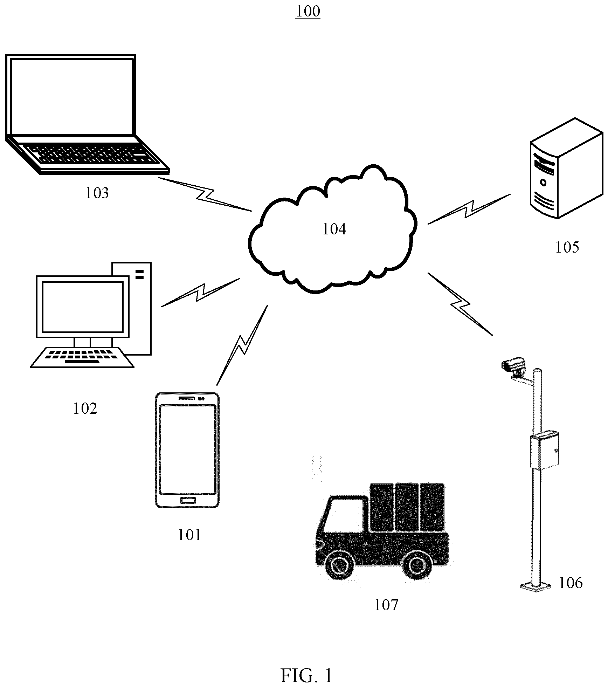

FIG. 1 schematically shows an exemplary system architecture to which an image recognition method and an image recognition apparatus of the present disclosure are applied. It should be noted that, FIG. 1 shows only an exemplary system architecture to which embodiments of the present disclosure may be applied to help those skilled in the art understand the technical content of the present disclosure, but it does not mean that embodiments of the present disclosure may not be used in other devices, systems, environments or scenarios.

As shown in FIG. 1, a system architecture 100 according to embodiments may include terminal devices 101, 102, 103, a network 104, a server 105, an image acquisition apparatus 106, and a vehicle 107. The network 104 is used to provide a medium for communication links between the terminal devices 101, 102, 103 and the server 105. The network 104 may include various connection types, such as wired and/or wireless communication links, etc.

The terminal devices 101, 102, 103 may be used by the user to interact with the server 105 through the network 104 to receive or transmit messages etc. Various communication client applications may be installed on the terminal devices 101, 102, 103, such as shopping applications, web browser applications, search applications, instant messaging tools, email clients, and/or social platform software, etc. (only examples).

The terminal devices 101, 102, 103 may be various electronic devices with a display screen and supporting web browsing, including but not limited to, smart phones, tablet computers, laptop computers, and desktop computers, etc.

The server 105 may be a server that provides various services, such as a background management server (only an example) that provides support for websites browsed by the user using the terminal devices 101, 102, and 103. The background management server may analyze and process data such as a received user request, and a processing result (for example, webpage, information, or data acquired or generated according to the user request) is fed back to the terminal device.

The image acquisition apparatus 106 may be a monitoring camera apparatus, etc. The vehicle 107 may be a vehicle operating around the operating platform. The image acquisition apparatus 106 may transmit information to the server 105 through the network 104. The image acquisition apparatus 106 may also transmit information to the terminal devices 101, 102, and 103 through the network 104.

It should be noted that, the image recognition method provided in embodiments of the present disclosure may generally be executed by the server 105. For example, the image acquisition apparatus 106 (such as the monitoring camera apparatus) provided in the operating site (such as a logistics industrial park) may be used to acquire image information of the vehicle 107 operating around the operating platform, and the image information containing the vehicle 106 may be used as the image information to be processed. A license plate number (i.e. vehicle identification) of the vehicle 107 is recorded in the image information to be processed. When the vehicle enters the operating site, the vehicle identification of the vehicle entering the operating site from the entrance of the operating site is recorded by the relevant personnel or device. The set of vehicle identifications may include the license plate number information of all vehicles entering the operating site. The image information to be processed and the vehicle license plate number information recorded by the relevant personnel or device may be sent to the server 105, which will execute the image recognition method provided in embodiments of the present disclosure.

The image recognition apparatus provided in embodiments of the present disclosure may be generally provided in the server 105. The image recognition method provided in embodiments of the present disclosure may also be executed by a server or a server cluster different from the server 105 and capable of communicating with the terminal devices 101, 102, 103 and/or the server 105.

The image recognition apparatus provided in embodiments of the present disclosure may also be provided in the server or the server cluster different from the server 105 and capable of communicating with the terminal devices 101, 102, 103 and/or the server 105. Alternatively, the image recognition method provided in embodiments of the present disclosure may also be executed by terminal devices 101, 102, and 103, or by other terminal devices different from the terminal devices 101, 102, and 103. The image recognition apparatus provided in embodiments of the present disclosure may also be provided in the terminal devices 101, 102, and 103, or in other terminal devices different from the terminal devices 101, 102, and 103.

It should be understood that, the numbers of terminal devices, networks and servers in FIG. 1 are merely illustrative. According to implementation needs, there may be any number of terminal devices, networks and servers.

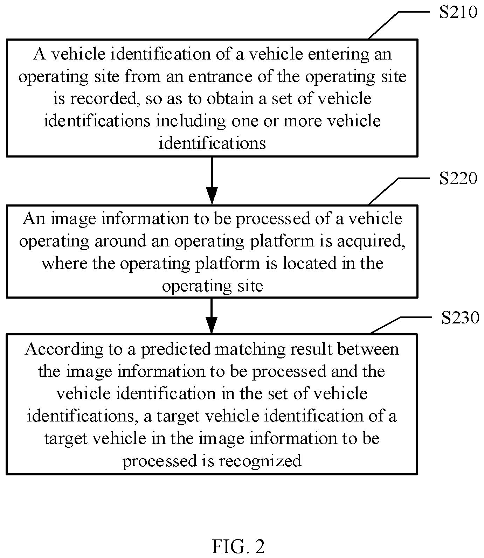

FIG. 2 schematically shows a flowchart of an image recognition method according to an embodiment of the present disclosure.

As shown in FIG. 2, the image recognition method includes operations S210 to S230.

In operation S210, a vehicle identification of a vehicle entering an operating site from an entrance of the operating site is recorded, so as to obtain a set of vehicle identifications including one or more vehicle identifications.

According to an embodiment of the present disclosure, the operating site may include a logistics operating site, a construction operating site, an industrial park, etc. The vehicle identification may include a vehicle license plate number, a vehicle operation identification number, etc. An image of the vehicle entering the operating site from the entrance of the operating site may be acquired by a camera apparatus provided at the entrance of the operating site. The image may be recognized by relevant technology to obtain the recorded vehicle identification. Alternatively, the vehicle identification may be manually recorded. The specific technical means for recording the vehicle identification are not limited in embodiments of the present disclosure.

In operation S220, an image information to be processed of a vehicle operating around an operating platform is acquired. The operating platform is located in the operating site.

In operation S230, according to a predicted matching result between the image information to be processed and the vehicle identification in the set of vehicle identifications, a target vehicle identification of a target vehicle in the image information to be processed is recognized.

According to an embodiment of the present disclosure, the operating platform may include a region in the operating site. The vehicle may be used to load and unload goods as well as level roads around the operating platform after entering the operating site. The image information to be processed of the vehicle operating around the operating platform may be acquired by the monitoring camera apparatus. The image to be processed may include one or more vehicles entering the operating site and operating around the operating platform. These vehicles in the image information to be processed may be target vehicles, and the vehicle identification of each target vehicle may be the target vehicle identification.

According to an embodiment of the present disclosure, by recording a vehicle identification of a vehicle entering an operating site from an entrance of the operating site to obtain a set of identifications of vehicles entering the operating site, acquiring image information to be processed of a vehicle operating around an operating platform, and recognizing a target vehicle identification of a target vehicle in the image information to be processed according to a predicted matching result between the image information to be processed and the vehicle identification in the set of the identifications of the vehicles entering the operating site, the technical problem of low accuracy or even inability to recognize the vehicle identification due to unclear image information to be processed or contamination of the vehicle identification in the image information to be processed in the related art may be at least partially alleviated, thereby reducing errors in vehicle identification recognition, improving the accuracy of vehicle identification recognition, and improving the level of intelligent management for the vehicles entering the operating site for operating.

According to an embodiment of the present disclosure, in operation S210, the recording a vehicle identification of a vehicle entering an operating site from an entrance of the operating site so as to obtain a set of vehicle identifications including one or more vehicle identifications may include the following operations.

Vehicle image information of the vehicle entering the operating site from the entrance of the operating site is acquired. The vehicle identification of the vehicle entering the operating site from the entrance of the operating site is determined according to the vehicle image information. The set of vehicle identifications is determined according to the vehicle identification of the vehicle entering the operating site from the entrance of the operating site.

According to an embodiment of the present disclosure, the vehicle image information of the vehicle entering the operating site from the entrance of the operating site may be acquired by the image acquisition device such as a video monitoring device. The vehicle identification of the vehicle entering the operating site may be recognized through a relevant image recognition apparatus, such as the image recognition apparatus constructed based on the convolutional neural network. The vehicle identifications of the vehicles entering the operating site may be summarized by determining the set of vehicle identifications according to the recognized vehicle identification, thereby providing a necessary basis for obtaining the predicted matching result for the image information to be processed according to the image information to be processed and the vehicle identification in the following steps.

It should be noted that, the vehicle image information may also be recognized manually to determine the vehicle identification of the vehicle entering the operating site from the entrance of the operating site. Embodiments of the present disclosure do not limit the specific technical means for determining the vehicle identification.

In an embodiment, the vehicle identification may also be generated by recording the license plate number of the vehicle entering the operating site, so as to generate the set of vehicle identifications containing license plate numbers of different vehicles. By using the image recognition method provided in embodiments of the present disclosure, the license plate number of the vehicle currently in operation contained in the image information to be processed may be matched with the license plate number of the vehicle entering the operating site, and the license plate number of the vehicle recorded in the image information to be processed may be recognized as the license plate number contained in the set of vehicle identifications, which may reduce image recognition errors caused by inconsistency between the recognition result of the image information to be processed and the vehicle identification, thereby improving the accuracy of image recognition.

It should be noted that, after the vehicle leaves the operating site, the vehicle identification corresponding to the vehicle that has already left the operating site may be deleted from the set of vehicle identifications to reduce the number of vehicle identifications in the set of vehicle identifications, thereby reducing the calculation amount of text feature extraction for the vehicle identification in the set of vehicle identifications to improve the efficiency of image information recognition, as well as avoiding recognizing the image information to be processed as the vehicle identification of the vehicle that has already left the operating site, thereby improving the accuracy of image recognition.

According to an embodiment of the present disclosure, after the vehicle arrives at the operating platform, the image information to be processed of the vehicle around the operating platform may be acquired by the monitoring camera apparatus. Due to the small size of the region of the license plate identification of the vehicle in the image information to be processed, the WPOD algorithm may be used to automatically detect a target image region corresponding to the license plate, and intercept the target image region to generate target image information to be processed. Then, the target image information to be processed may be resized to unify the format of the location, size, and angle of the license plate in the target image information to be processed, facilitating subsequent processing of the target image information to be processed.

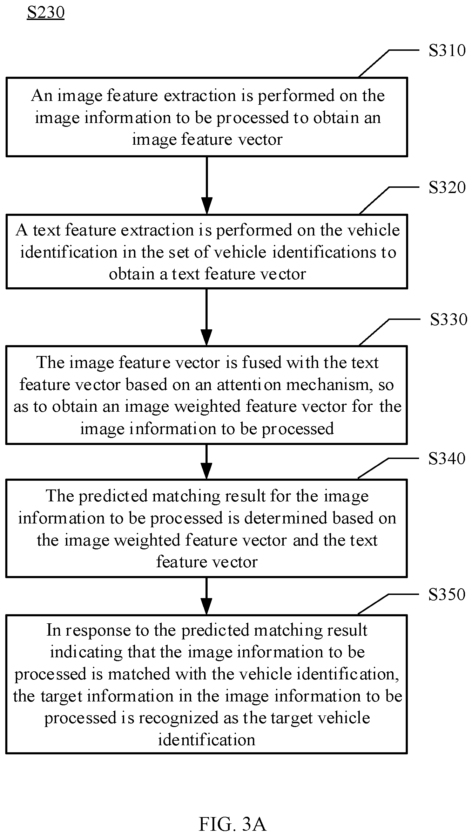

FIG. 3A schematically shows a flowchart of recognizing, according to a predicted matching result between an image information to be processed and a vehicle identification in a set of vehicle identifications, a target vehicle identification of a target vehicle in the image information to be processed, according to an embodiment of the present disclosure.

As shown in FIG. 3A, in operation S230, recognizing a target vehicle identification of a target vehicle in the image information to be processed according to a predicted matching result between the image information to be processed and the vehicle identification in the set of vehicle identifications may include operations S310 to S350.

In operation S310, an image feature extraction is performed on the image information to be processed to obtain an image feature vector. The target information is recorded in the image information to be processed.

According to an embodiment of the present disclosure, the target information recorded in the image information to be processed may include text information. For example, in a case that the image information to be processed is a surveillance photo in an industrial park, the target information may include text information of vehicle license plates in the industrial park, text information of signs in the industrial park, etc.

According to an embodiment of the present disclosure, the image feature extraction may be performed on the image information to be processed based on a network model constructed by a neural network, such as the convolutional neural network model, the long short-term memory neural network model, etc.

It should be noted that, before performing the feature extraction on the image information to be processed, the image information to be processed may be preprocessed by a preprocessing operation such as cutting, stretching, etc.

In operation S320, a text feature extraction is performed on the vehicle identification in the set of vehicle identifications to obtain a text feature vector.

According to an embodiment of the present disclosure, performing a text feature extraction on the vehicle identification may include extracting a character-level feature, a word-level feature, or a contextual feature from the vehicle identification, so that the obtained text feature vector contains the contextual feature in the vehicle identification, thereby avoiding missing extracted text features.

In operation S330, the image feature vector is fused with the text feature vector based on an attention mechanism, so as to obtain an image weighted feature vector for the image information to be processed.

According to an embodiment of the present disclosure, the image feature vector and the text feature vector may be fused based on the attention mechanism to fuse the text feature in the text feature vector with the image feature in the image feature vector, so that the obtained image weighted feature vector includes an association between the image feature and the text feature, thereby reducing the calculation time length and improving the calculation efficiency for determining the prediction result for the image information to be processed in the following steps.

In operation S340, the predicted matching result for the image information to be processed is determined based on the image weighted feature vector and the text feature vector.

In operation S350, in response to the predicted matching result indicating that the image information to be processed is matched with the vehicle identification, the target information in the image information to be processed is recognized as the target vehicle identification.

According to an embodiment of the present disclosure, the image weighted feature vector and the text feature vector may be processed based on the network model constructed by the neural network. In a case that the prediction result indicates that the image information to be processed is matched with the vehicle identification, it may be determined that the target information in the image information to be processed is the same as the vehicle identification, thereby recognizing the target information in the image information to be processed.

According to an embodiment of the present disclosure, as the target information is recorded in the image information to be processed, when the image feature extraction is performed on the image information to be processed, the obtained image feature vector may contain the target information. The text feature extraction is performed on the vehicle identification in the set of vehicle identifications to obtain the text feature vector. The image feature vector and the text feature vector are fused based on the attention mechanism, so that the obtained image weighted feature vector for the image information to be processed may include the association between the image feature vector and the text feature vector. In this way, the predicted result for the image information to be processed determined based on the image weighted feature vector and the text feature vector may indicate that the image information to be processed is matched with the vehicle identification, so as to recognize the target information in the image information to be processed as the vehicle identification, thereby reducing target information recognition errors, and improving the accuracy of recognizing the target information recorded in the image information to be processed.

According to an embodiment of the present disclosure, performing an image feature extraction on the image information to be processed to obtain an image feature vector may include the following operations.

The image information to be processed is input into a first image feature extraction layer, so as to extract an image feature of the image information to be processed in a first direction and output a first image feature vector. The image information to be processed is input into a second image feature extraction layer, so as to extract an image feature of the image information to be processed in a second direction and output a second image feature vector. The image feature vector includes the first image feature vector and the second image feature vector, and the first direction is perpendicular to the second direction.

According to an embodiment of the present disclosure, the first image feature extraction layer and the second image feature extraction layer may be neural network layers constructed based on the convolutional neural network. The image information to be processed is input into the first image feature extraction layer, and the image feature of the image information to be processed in the first direction may be extracted according to the movement of the first convolutional kernel in the first direction on the image information to be processed. The image information to be processed is input into the first image feature extraction layer, and the image feature of the image information to be processed in the first direction may be extracted according to the movement of the first convolutional kernel in the first direction on the image information to be processed. The image information to be processed is input into the second image feature extraction layer, and the image feature of the image information to be processed in the second direction may be extracted according to the movement of the second convolutional kernel in the second direction on the image information to be processed. Therefore, the output image feature vector contains the first image feature vector and the second image feature vector, so that the image feature vector may include the associations in both the first and second directions of the image information to be processed, thereby achieving the extraction of image features in different text information formats recorded in the image information to be processed.

It should be noted that, the first convolutional kernel of the first image feature extraction layer may be same as or different from the second convolutional kernel of the second image feature extraction layer. Those skilled in the art may design according to actual needs.

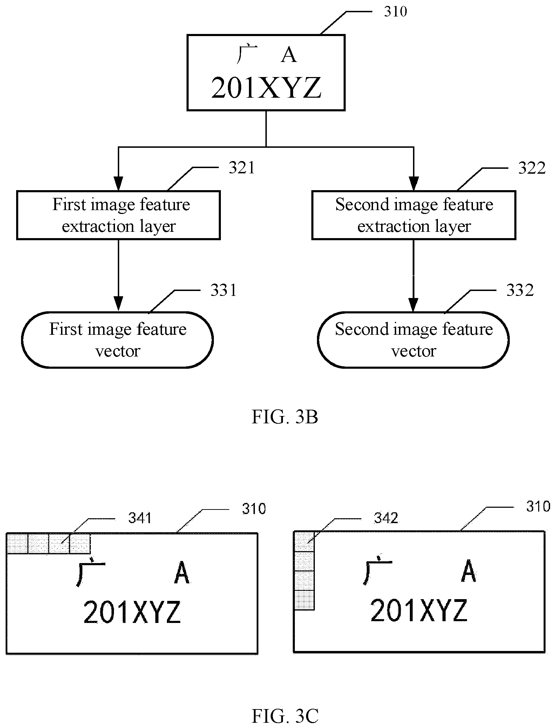

FIG. 3B schematically shows an application scenario diagram of performing an image feature extraction on an image information to be processed according to an embodiment of the present disclosure.

FIG. 3C schematically shows another application scenario diagram of performing an image feature extraction on an image information to be processed according to an embodiment of the present disclosure.

Combining reference FIG. 3B and FIG. 3C, an image information 310 to be processed may be the image information of a license plate, and a target information " $\int^{\frown}$ A201XYZ" is recorded in the image information 310 to be processed. The text information format of the target information may include the text information " $\int^{\frown}$ A" recorded in the first row and the text information "201XYZ" recorded in the second row.

The image information 310 to be processed is input into a first image feature extraction layer 321, so as to extract the image feature of the image information 310 to be processed in a first direction and output a first image feature vector 331. For example, the image feature of the image information 310 to be processed in a horizontal direction may be extracted using a first convolutional kernel 341. The first convolutional kernel 341 may be a matrix vector of 1 *4 dimensions, and the first direction may be the horizontal direction of the image information 310 to be processed.

The image information 310 to be processed is input into a second image feature extraction layer 322, so as to extract the image feature of the image information 310 to be processed in a second direction and output a second image feature vector 332. For example, the image feature of the image information 310 to be processed in a vertical direction may be extracted using a second convolutional kernel 342. The second convolutional kernel 342 may be a matrix vector of 4*1 dimensions, and the first direction may be the vertical direction of the image information 310 to be processed.

By separately extracting the image feature of the image information 310 to be processed in the horizontal direction and the image feature of the image information 310 to be processed in the vertical direction, the first image feature vector 331 and the second image feature vector 332 contained in the image feature vector may retain the associations in the horizontal and vertical directions of the image information to be processed, thereby achieving the extraction of image features in different text information formats recorded in the image information 310 to be processed.

According to an embodiment of the present disclosure, in operation S320, performing a text feature extraction on the vehicle identification in the set of vehicle identifications to obtain a text feature vector may include the following operations.

The vehicle identification in the set of vehicle identifications is input into a text feature extraction layer, so as to output the text feature vector.

According to an embodiment of the present disclosure, the text feature extraction layer may be a network layer constructed based on the neural network, such as a network layer constructed based on the recurrent neural network, the long short-term memory network, or the bidirectional long short-term memory network.

In an embodiment, the text feature extraction layer may be a network layer constructed based on the bidirectional long short-term memory network (BiLSTM) to extract the contextual feature of the text in the vehicle identification, thereby avoiding feature information missing in the output text feature vector.

According to an embodiment of the present disclosure, the vehicle identification may be preprocessed and then input into the text feature extraction layer. For example, one-hot encoding operation may be performed on each character in the vehicle identification to obtain a target text encoding matrix. Dimension reduction processing may be performed on the target text encoding matrix to reduce the complexity of the target text encoding matrix, so as to obtain the reduced target text encoding matrix. The reduced target text encoding matrix is input into the text feature extraction layer to output the text feature vector, thereby improving the calculation speed and calculation efficiency of the text feature extraction layer.

It should be noted that, the specific method for preprocessing the vehicle identification is not limited in embodiments of the present disclosure. Those skilled in the art may design and choose the preprocessing method according to actual desires.

According to an embodiment of the present disclosure, in operation S320, performing a text feature extraction on the vehicle identification in the set of vehicle identifications to obtain a text feature vector may further include the following operations.

The vehicle identification is completed so that the number of characters in the vehicle identification meets a preset rule before inputting the vehicle identification into the text feature extraction layer.

According to an embodiment of the present disclosure, the vehicle identification may include the license plate number. Different license plate numbers may have different numbers of characters. For example, a license plate number of a new energy related vehicle may have 8 characters, while a license plate number of another vehicle may have 7 characters. Therefore, completing the vehicle identification may ensure that the number of characters in the vehicle identification meets a unified preset rule, which facilitates subsequent feature extraction of the vehicle identification, and avoids the need to design different text feature extraction methods for vehicle identifications having different numbers of characters due to the different number of characters in the vehicle identifications, thereby reducing the operational steps of subsequent text feature extraction and improving the calculation efficiency.

According to an embodiment of the present disclosure, in operation S330, fusing the image feature vector with the text feature vector based on an attention mechanism so as to obtain an image weighted feature vector for the image information to be processed may include the following operations.

The first image feature vector and the text feature vector are input into a first attention layer, so as to output a first image weighted feature vector. The second image feature vector and the text feature vector are input into a second attention layer, so as to output a second image weighted feature vector. The image weighted feature vector includes the first image weighted feature vector and the second image weighted feature vector.

According to an embodiment of the present disclosure, the first or second attention layer may be a neural network layer constructed based on the attention mechanism. For example, the first or second attention layer may be constructed based on Soft Attention, but not limited to this. The first or second attention layer may also be constructed based on Hard Attention. The network structures of the first and second attention layers may be the same or different. Those skilled in the art may design the network structures of the first and second attention layers according to actual desires.

According to an embodiment of the present disclosure, the first image feature vector may focus on the feature information in the image information to be processed associated with the text feature by inputting the first image feature vector and the text feature vector into the first attention layer, so that the output first image weighted feature vector contains the association between the first image feature vector and the text feature vector. The second image feature vector may focus on the feature information in the image information to be processed associated with the text feature by inputting the second image feature vector and the text feature vector into the second attention layer, so that the output second image weighted feature vector contains the association between the second image feature vector and the text feature vector.

According to an embodiment of the present disclosure, in operation S340, determining the predicted matching result for the image information to be processed based on the image weighted feature vector and the text feature vector may include the following operations.

The image weighted feature vector and the text feature vector are fused and encoded to generate a predicted input vector. The predicted input vector is input into a prediction classification layer, so as to output the predicted matching result for the image information to be processed.

According to an embodiment of the present disclosure, the prediction classification layer may include a network layer constructed based on the neural network, such as a prediction classification layer constructed based on multi-layer perceptron (MLP). The image weighted feature vector and the text feature vector are fused and encoded to fully fuse the image weighted feature and the text feature, thereby improving the accuracy of the predicted result output by the prediction classification layer.

According to an embodiment of the present disclosure, in the case where the image weighted feature vector includes the first image feature vector and the second image feature vector, the first image feature vector, the second image feature vector, and the text feature vector may be fused and encoded to fully fuse the image feature of the image information to be processed in the first direction, the image feature of the image information to be processed in the second direction, and the text feature of the vehicle identification, thereby reducing feature missing of the image information to be processed and improving the accuracy of the predicted result output by the prediction classification layer.

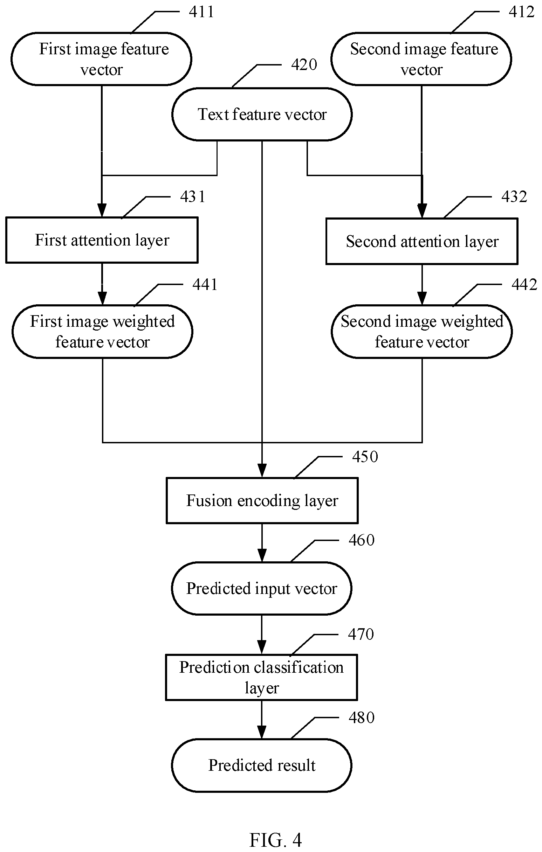

FIG. 4 schematically shows an application scenario diagram of an image recognition method according to an embodiment of the present disclosure.

As shown in FIG. 4, the first image feature vector 411 may be used to represent the image feature of the image information to be processed in the first direction, and the second image feature vector 412 may be used to represent the image feature of the image information to be processed in the second direction. The first image feature vector 411 may be represented as a matrix vector $u_{w,i}$, and the second image feature vector 412 may be represented as a matrix vector $u_{s,i}$. The text feature vector 420 may represent the text feature of the vehicle identification in the set of vehicle identifications. The text feature vector 420 may be represented as a matrix vector $h_i$.

It should be noted that the matrix vectors $u_{w,i}$, $u_{s,i}$, and $h_i$ may have the same dimensions.

The first image feature vector 411 and the text feature vector 420 may be input into the first attention layer 431, so as to output the first image weighted feature vector 441. The first attention layer 431 may be a neural network layer constructed based on Soft Attention. For example, the output first image weighted feature vector 441 may be obtained by equations (1) and (2):

$$\alpha_{w,ij} = \frac{exp(h_i^T u_{w,ij})}{\sum_i exp(h_i^T u_{w,ij})} \qquad (1)$$

$$\theta_{w,i} = \sum_j \alpha_{w,ij} u_{w,ij} \qquad (2)$$

In equations (1) and (2), the matrix vector $u_{w,i}$ represents the first image feature vector 411, and $\theta_{w,i}$ represents the first image weighted feature vector 441.

Based on the same or similar methods, the second image feature vector 412 and the text feature vector 420 may be input into the second attention layer 432, so as to output the second image weighted feature vector 442. The second attention layer 432 may be a neural network layer constructed based on Soft Attention. For example, the output second image weighted feature vector 442 may be obtained by equations (3) and (4):

$$\alpha_{s,ij} = \frac{exp(h_i^T u_{s,ij})}{\sum_i exp(h_i^T u_{s,ij})} \qquad (3)$$

$$\theta_{s,i} = \sum_j \alpha_{s,ij} u_{s,ij} \qquad (4)$$

In equations (3) and (4), the matrix vector $u_{s,i}$ represents the second image feature vector 412, and $\theta_{s,i}$ represents the second image weighted feature vector 442.

The first image weighted feature vector 441, the second image weighted feature vector 442, and the text feature vector 420 may be input into a fusion encoding layer 450, so as to output a predicted input vector 460. In an embodiment, the first image weighted feature vector 441, the second image weighted feature vector 442, and the text feature vector 420 may be fused and encoded based on the concat operation to generate the predicted input vector 460.

The predicted input vector 460 is input into the prediction classification layer 470 to output a predicted result 480. In an embodiment, the prediction classification layer 470 may be constructed based on a multi-layer perceptron (MLP) and output the predicted result 480 based on the Sigmoid function. The predicted result 480 may be a matching probability value between the image to be processed and the vehicle identification. A matching probability threshold may be set. If the predicted result 480 is greater than or equal to the matching probability threshold, the predicted result 480 may be determined to indicate that the image to be processed is matched with the vehicle identification. Alternatively, based on a plurality of predicted results, the vehicle identification corresponding to the highest probability value may be selected as the vehicle identification matched with the image information to be processed.

The target information in the image information to be processed may be recognized as the vehicle identification by determining the vehicle identification matched with the image information to be processed, thereby achieving the recognition of the target information in the image information to be processed.

According to an embodiment of the present disclosure, as the target information is recorded in the image information to be processed, when the image feature extraction is performed on the image information to be processed, the obtained image feature vector may contain the target information. The text feature extraction is performed on the vehicle identification in the set of vehicle identifications to obtain the text feature vector. The image feature vector and the text feature vector are fused based on the attention mechanism, so that the obtained image weighted feature vector for the image information to be processed may include the association between the image feature vector and the text feature vector. In this way, the predicted result for the image information to be processed determined based on the image weighted feature vector and the text feature vector may indicate that the image information to be processed is matched with the vehicle identification, so as to recognize the target information in the image information to be processed as the vehicle identification, thereby reducing target information recognition errors, and improving the accuracy of recognizing the target information recorded in the image information to be processed.

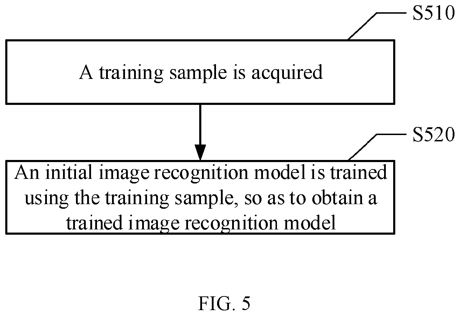

The present disclosure further provides a method of training an image recognition model, which will be described in detail below in conjunction with FIG. 5.

FIG. 5 schematically shows a flowchart of a method of training an image recognition model according to an embodiment of the present disclosure.

As shown in FIG. 5, the method of training the image recognition model includes operations S510 to S520.

In operation S510, a training sample is acquired. The training sample includes a sample image information to be processed, a sample vehicle identification, and a label corresponding to the sample image information to be processed.

In operation S520, an initial image recognition model is trained using the training sample, so as to obtain a trained image recognition model. The image recognition model is used to implement the image recognition method provided in embodiments of the present disclosure.

According to an embodiment of the present disclosure, the training samples may include positive and negative samples. For example, the sample vehicle identification may be matched with the image information to be processed recorded with the same sample vehicle identification to form a positive sample. The label corresponding to the positive sample may indicate that the sample image information to be processed is matched with the sample vehicle identification. The sample vehicle identification may be matched with the image information to be processed recorded with a different sample vehicle identification to form a negative sample. The label corresponding to the negative sample may indicate that the sample image information to be processed is not matched with the sample vehicle identification. The positive and negative samples are input into the initial image recognition model, so as to train the initial image recognition model using the labels corresponding to the positive sample and negative sample, respectively, thereby obtaining the trained image recognition model.

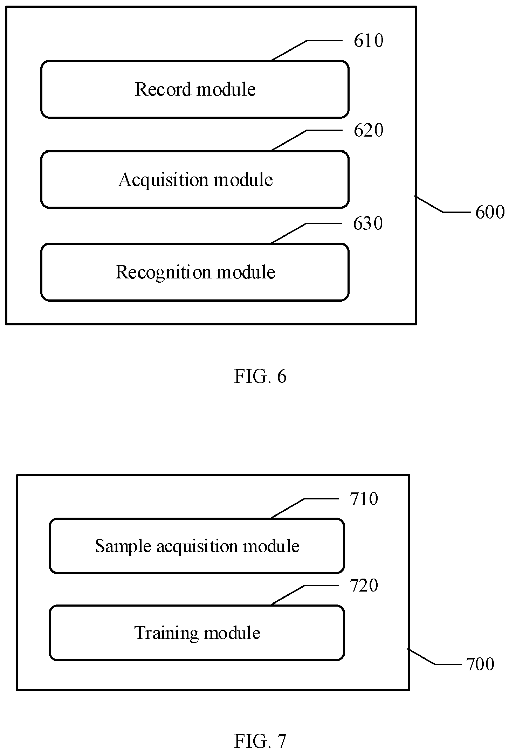

Based on the image recognition method described above, the present disclosure further provides an image recognition apparatus. The following will provide a detailed description of the apparatus in conjunction with FIG. 6.

FIG. 6 schematically shows a block diagram of an image recognition apparatus according to an embodiment of the present disclosure.

As shown in FIG.6, an image recognition apparatus 600 may include: a record module 610, an acquisition module 620, and a recognition module 630.

The record module 610 is used to record a vehicle identification of a vehicle entering an operating site from an entrance of the operating site, so as to obtain a set of vehicle identifications including one or more vehicle identifications.

The acquisition module 620 is used to acquire an image information to be processed of a vehicle operating around an operating platform, where the operating platform is located in the operating site.

The recognition module 630 is used to recognize a target vehicle identification of a target vehicle in the image information to be processed, according to a predicted matching result between the image information to be processed and the vehicle identification in the set of vehicle identifications.

According to an embodiment of the present disclosure, the recognition module may include: an image feature extraction sub-module, a text feature extraction sub-module, a feature fusion sub-module, a prediction sub-module, and a recognition sub-module.

The image feature extraction sub-module is used to perform an image feature extraction on the image information to be processed to obtain an image feature vector, where a target information is recorded in the image information to be processed.

The text feature extraction sub-module is used to perform a text feature extraction on the vehicle identification in the set of vehicle identifications to obtain a text feature vector.

The feature fusion sub-module is used to fuse the image feature vector with the text feature vector based on an attention mechanism, so as to obtain an image weighted feature vector for the image information to be processed.

The prediction sub-module is used to determine the predicted matching result for the image information to be processed based on the image weighted feature vector and the text feature vector.

The recognition sub-module is used to recognize the target information in the image information to be processed as the target vehicle identification, in response to the predicted matching result indicating that the image information to be processed is matched with the vehicle identification.

According to an embodiment of the present disclosure, the image feature extraction sub-module may include: a first image feature extraction unit and a second image feature extraction unit.

The first image feature extraction unit is used to input the image information to be processed into a first image feature extraction layer, so as to extract an image feature of the image information to be processed in a first direction and output a first image feature vector.

The second image feature extraction unit is used to input the image information to be processed into a second image feature extraction layer, so as to extract an image feature of the image information to be processed in a second direction and output a second image feature vector, where the image feature vector includes the first image feature vector and the second image feature vector, and the first direction is perpendicular to the second direction.

According to an embodiment of the present disclosure, the feature fusion sub-module includes a first attention unit and a second attention unit.

The first attention unit is used to input the first image feature vector and the text feature vector into a first attention layer, so as to output a first image weighted feature vector.

The second attention unit is used to input the second image feature vector and the text feature vector into a second attention layer, so as to output a second image weighted feature vector, where the image weighted feature vector includes the first image weighted feature vector and the second image weighted feature vector.

According to an embodiment of the present disclosure, the prediction sub-module may include a fusion unit and a prediction unit.

The fusion unit is used to fuse and encode the image weighted feature vector and the text feature vector to generate a predicted input vector.

The prediction unit is used to input the predicted input vector into a prediction classification layer, so as to output the predicted matching result for the image information to be processed.

According to an embodiment of the present disclosure, the text feature extraction sub-module may include a text feature extraction unit.

The text feature extraction unit is used to input the vehicle identification in the set of vehicle identifications into a text feature extraction layer, so as to output the text feature vector.

According to an embodiment of the present disclosure, the text feature extraction sub-module may further include a preprocessing unit.

The preprocessing unit is used to complete the vehicle identification so that the number of characters in the vehicle identification meets a preset rule, before inputting the vehicle identification into the text feature extraction layer.

According to an embodiment of the present disclosure, the record module may include: an acquisition sub-module, a determination sub-module, and a record sub-module.

The acquisition sub-module is used to acquire a vehicle image information of the vehicle entering the operating site from the entrance of the operating site.

The determination sub-module is used to determine the vehicle identification of the vehicle entering the operating site from the entrance of the operating site according to the vehicle image information.

The record sub-module is used to determine the set of vehicle identifications according to the vehicle identification of the vehicle entering the operating site from the entrance of the operating site.

The present disclosure further provides an apparatus of training an image recognition model, which will be described in detail below in conjunction with FIG. 7.

FIG. 7 schematically shows a block diagram of an apparatus of training an image recognition model according to an embodiment of the present disclosure.

As shown in FIG. 7, an apparatus 700 of training an image recognition model may include: a sample acquisition module 710 and a training module 720.

The sample acquisition module 710 is used to acquire a training sample, where the training sample includes a sample image information to be processed, a sample vehicle identification, and a label corresponding to the sample image information to be processed.

The training module 720 is used to train an initial image recognition model using the training sample, so as to obtain a trained image recognition model.

The image recognition model is used to implement the image recognition method provided by the present disclosure.

It should be noted that embodiments of the apparatus part of the present disclosure are same as or similar to embodiments of the method part of the present disclosure, which will not be repeated here.

According to embodiments of the present disclosure, any number of modules, sub-modules, units and sub-units, or at least part of functions thereof, may be implemented in one module. Any one or more of modules and units according to embodiments of the present disclosure may be split into a plurality of modules for implementation. Any one or more of modules, sub-modules, units and sub-units according to embodiments of the present disclosure may be at least partially implemented as hardware circuits, such as field programmable gate array (FPGA), programmable logic array (PLA), system on chip, system on substrate, system on package, application specific integrated circuit (ASIC), or it may be implemented by hardware or firmware in any other reasonable way that integrates or encapsulates the circuit, or it is implemented by any one of software, hardware, and firmware or an appropriate combination thereof. Alternatively, one or more of the modules, sub-modules, units, and sub-units according to embodiments of the present disclosure may be at least partially implemented as a computer program module, and when the computer program module is executed, the corresponding function may be performed.

For example, any two or more of the record module 610, the acquisition module 620, the recognition module 630, the sample acquisition module 710 and the training module 720 may be combined into one module/unit/sub-unit for implementation, or any one of these modules/sub-modules/units/sub-units may be split into a plurality of modules/sub-modules/units/sub-units. Alternatively, at least part of the functions of one or more of these modules/sub-modules/units/sub-units may be combined with at least part of the functions of other modules/sub-modules/units/sub-units and implemented in one module/sub-module/unit/sub-unit. According to embodiments of the present disclosure, at least one of the record module 610, the acquisition module 620, the recognition module 630, the sample acquisition module 710 and the training module 720 may be at least partially implemented as a hardware circuit, such as field programmable gate array (FPGA), programmable logic array (PLA), system on chip, system on substrate, system on package, application specific integrated circuit (ASIC), or it may be implemented by hardware or firmware in any other reasonable way that integrates or encapsulates the circuit, or implemented by any one of software, hardware, and firmware, or an appropriate combination thereof. Alternatively, at least one of the record module 610, the acquisition module 620, the recognition module 630, the sample acquisition module 710 and the training module 720 may be at least partially implemented as a computer program module. When the computer program module is executed, the corresponding function may be performed.

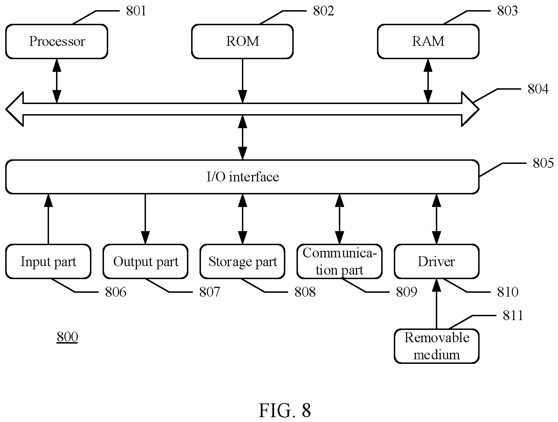

FIG. 8 schematically shows a block diagram of an electronic device for implementing a method provided by an embodiment of the present disclosure according to an embodiment of the present disclosure. The electronic device shown in FIG. 8 is only an example, and should not have any limitation to the function and scope of embodiments of the present disclosure.

As shown in FIG. 8, the electronic device 800 according to embodiments of the present disclosure includes a processor 801, which may perform various appropriate actions and processes according to a program stored in a read only memory (ROM) 802 or a program loaded from a storage part 808 into a random access memory (RAM) 803. The processor 801 may include, for example, a general-purpose microprocessor (for example, a CPU), an instruction set processor and/or a related chipset and/or a special-purpose microprocessor (for example, an application specific integrated circuit (ASIC)), etc. The processor 801 may also include an on-board memory for caching purposes. The processor 801 may include a single processing unit or multiple processing units for performing different actions of the method flow according to embodiments of the present disclosure.

In the RAM 803, various programs and data required for the operation of the electronic device 800 are stored. The processor 801, the ROM 802 and the RAM 803 are connected to each other through a bus 804. The processor 801 performs various operations of the method flow according to embodiments of the present disclosure by performing programs in the ROM 802 and/or RAM 803. It should be noted that the program may also be stored in one or more memories other than the ROM 802 and the RAM 803. The processor 801 may also perform various operations of the method flow according to embodiments of the present disclosure by performing programs stored in the one or more memories.

According to embodiments of the present disclosure, the electronic device 800 may further include an input/output (I/O) interface 805, and the input/output (I/O) interface 805 is also connected to the bus 804. The system 800 may also include one or more of the following components connected to the I/O interface 805: an input part 806 including a keyboard, a mouse, etc.; an output part 807 including such as a cathode ray tube (CRT), a liquid crystal display (LCD), a speaker, etc.; a storage part 808 including a hard disk, etc.; and a communication part 809 including a network interface card such as a LAN card, a modem, etc. The communication part 809 performs communication processing through a network such as the Internet. A driver 810 is also connected to the I/O interface 805 as required. A removable medium 811, such as a magnetic disk, an optical disk, a magneto-optical disk, a semiconductor memory, etc., is installed on the driver 810 as required, so that the computer program read therefrom is installed into the storage part 808 as required.

According to embodiments of the present disclosure, the method flow according to embodiments of the present disclosure may be implemented as a computer software program. For example, embodiments of the present disclosure include a computer program product, which includes a computer program carried on a computer-readable storage medium, and the computer program contains program codes for implementing the method shown in the flowchart. In such embodiments, the computer program may be downloaded and installed from the network through the communication part 809, and/or installed from the removable medium 811. When the computer program is executed by the processor 801, it executes the above mentioned functions defined in the system of embodiments of the present disclosure. According to embodiments of the present disclosure, the systems, devices, apparatuses, modules, units, etc. described above may be implemented by computer program modules.

The present disclosure further provides a computer-readable storage medium. The computer-readable storage medium may be included in the device/apparatus/system described in the above mentioned embodiments; or it may exist alone without being assembled into the apparatus/device/system. The above mentioned computer-readable storage medium carries one or more programs, and when the above mentioned one or more programs are executed, the method according to embodiments of the present disclosure is implemented.

According to embodiments of the present disclosure, the computer-readable storage medium may be a non-volatile computer-readable storage medium, for example, may include but not limited to: portable computer disk, hard disk, random access memory (RAM), read-only memory (ROM), erasable programmable read-only memory (EPROM or flash memory), portable compact disk read-only memory (CD-ROM), optical storage device, magnetic storage device, or any suitable combination of the above. In the present disclosure, the computer-readable storage medium may be any tangible medium that contains or stores a program, and the program may be used by or in combination with an instruction execution system, apparatus, or device.

For example, according to embodiments of the present disclosure, the computer-readable storage medium may include the ROM 802 and/or RAM 803 and/or one or more memories other than ROM 802 and RAM 803 described above.

The flowcharts and block diagrams in the drawings illustrate the possible implementation architecture, functions, and operations of the system, method and computer program product according to various embodiments of the present disclosure. In this regard, each block in the flowchart or block diagram may represent a module, program segment, or part of codes, and the above mentioned module, program segment, or part of codes contains one or more executable instructions for implementing specified logic function. It should also be noted that, in some alternative implementations, the functions marked in the block may also occur in a different order from the order marked in the drawings. For example, two blocks shown in succession may actually be executed substantially in parallel, and the blocks may sometimes be executed in a reversed order, depending on the functions involved. It should also be noted that each block in the block diagram or flowchart, and the combination of blocks in the block diagram or flowchart, may be implemented by a dedicated hardware-based system that performs the specified functions or operations, or may be implemented by a combination of dedicated hardware and computer instructions.

Those skilled in the art may understand that the features described in the various embodiments of the present disclosure and/or the claims may be combined and/or incorporated in various ways, even if such combinations or incorporations are not explicitly described in the present disclosure. In particular, without departing from the spirit and teachings of the present disclosure, the various embodiments of the present disclosure and/or the features described in the claims may be combined and/or incorporated in various ways. All these combinations and/or incorporations fall within the scope of the present disclosure.

Embodiments of the present disclosure have been described above. However, these embodiments are for illustrative purposes only, and are not intended to limit the scope of the present disclosure. Although the respective embodiments are described above, this does not mean that the measures in the respective embodiments may not be advantageously used in combination. The scope of the present disclosure is defined by the appended claims and their equivalents. Those skilled in the art may make various substitutions and modifications without departing from the scope of the present disclosure, and these substitutions and modifications should all fall within the scope of the present disclosure.

## Claims

1. An image recognition method, comprising:

recording a vehicle identification of a vehicle entering an operating site from an entrance of the operating site, so as to obtain a set of vehicle identifications comprising one or more vehicle identifications;

acquiring an image information to be processed of a vehicle operating around an operating platform, wherein the operating platform is located in the operating site; and

recognizing a target vehicle identification of a target vehicle in the image information to be processed, according to a predicted matching result between the image information to be processed and the vehicle identification in the set of vehicle identifications.

2. The method according to claim 1, wherein the recognizing a target vehicle identification of a target vehicle in the image information to be processed according to a predicted matching result between the image information to be processed and the vehicle identification in the set of vehicle identifications comprises:

performing an image feature extraction on the image information to be processed to obtain an image feature vector, wherein a target information is recorded in the image information to be processed;

performing a text feature extraction on the vehicle identification in the set of vehicle identifications to obtain a text feature vector;

fusing the image feature vector with the text feature vector based on an attention mechanism, so as to obtain an image weighted feature vector for the image information to be processed;

determining the predicted matching result for the image information to be processed based on the image weighted feature vector and the text feature vector; and

recognizing the target information in the image information to be processed as the target vehicle identification, in response to the predicted matching result indicating that the image information to be processed is matched with the vehicle identification.

3. The method according to claim 2, wherein the performing an image feature extraction on the image information to be processed to obtain an image feature vector comprises:

inputting the image information to be processed into a first image feature extraction layer, so as to extract an image feature of the image information to be processed in a first direction and output a first image feature vector; and

inputting the image information to be processed into a second image feature extraction layer, so as to extract an image feature of the image information to be processed in a second direction and output a second image feature vector,

wherein the image feature vector comprises the first image feature vector and the second image feature vector, and the first direction is perpendicular to the second direction.

4. The method according to claim 3, wherein the fusing the image feature vector with the text feature vector based on an attention mechanism so as to obtain an image weighted feature vector for the image information to be processed comprises:

inputting the first image feature vector and the text feature vector into a first attention layer, so as to output a first image weighted feature vector; and

inputting the second image feature vector and the text feature vector into a second attention layer, so as to output a second image weighted feature vector,

wherein the image weighted feature vector comprises the first image weighted feature vector and the second image weighted feature vector.

5. The method according to claim 2, wherein the determining the predicted matching result for the image information to be processed based on the image weighted feature vector and the text feature vector comprises:

fusing and encoding the image weighted feature vector and the text feature vector to generate a predicted input vector; and

inputting the predicted input vector into a prediction classification layer, so as to output the predicted matching result for the image information to be processed.

6. The method according to claim 2, wherein the performing a text feature extraction on the vehicle identification in the set of vehicle identifications to obtain a text feature vector comprises:
inputting the vehicle identification in the set of vehicle identifications into a text feature extraction layer, so as to output the text feature vector.

7. The method according to claim 6, wherein the performing a text feature extraction on the vehicle identification in the set of vehicle identifications to obtain a text feature vector further comprises:
completing the vehicle identification so that a number of characters in the vehicle identification meets a preset rule, before inputting the vehicle identification into the text feature extraction layer.

8. The method according to claim 1, wherein the recording a vehicle identification of a vehicle entering an operating site from an entrance of the operating site so as to obtain a set of vehicle identifications comprising one or more vehicle identifications comprises:

acquiring a vehicle image information of the vehicle entering the operating site from the entrance of the operating site;
determining the vehicle identification of the vehicle entering the operating site from the entrance of the operating site according to the vehicle image information; and
determining the set of vehicle identifications according to the vehicle identification of the vehicle entering the operating site from the entrance of the operating site.

9. A method of training an image recognition model, comprising:

acquiring a training sample, wherein the training sample comprises a sample image information to be processed, a sample vehicle identification, and a label corresponding to the sample image information to be processed; and
training an initial image recognition model using the training sample, so as to obtain a trained image recognition model,
wherein the image recognition model is configured to implement the image recognition method of any one of claims 1 to 8.

10. An image recognition apparatus, comprising:

a record module configured to record a vehicle identification of a vehicle entering an operating site from an entrance of the operating site, so as to obtain a set of vehicle identifications comprising one or more vehicle identifications;
an acquisition module configured to acquire an image information to be processed of a vehicle operating around an operating platform, wherein the operating platform is located in the operating site; and
a recognition module configured to recognize a target vehicle identification of a target vehicle in the image information to be processed, according to a predicted matching result between the image information to be processed and the vehicle identification in the set of vehicle identifications.

11. An apparatus of training an image recognition model, comprising:

a sample acquisition module configured to acquire a training sample, wherein the training sample comprises a sample image information to be processed, a sample vehicle identification, and a label corresponding to the sample image information to be processed; and
a training module configured to train an initial image recognition model using the training sample, so as to obtain a trained image recognition model,
wherein the image recognition model is configured to implement the image recognition method of any one of claims 1 to 8.

12. A computer system, comprising:

one or more processors; and
a memory configured to store one or more programs,
wherein the one or more programs, when executed by the one or more processors, are configured to cause the one or more processors to implement the method of any one of claims 1 to 8, or implement the method of claim 9.

13. A computer-readable storage medium having executable instructions stored thereon, wherein the instructions, when executed by a processor, are configured to cause the processor to implement the method of any one of claims 1 to 8, or implement the method of claim 9.

**14.** A computer program product, comprising a computer program, wherein the computer program, when executed by a processor, is configured to implement the method of any one of claims 1 to 8, or implement the method of claim 9.

100

FIG. 1

S210

A vehicle identification of a vehicle entering an operating site from an entrance of the operating site is recorded, so as to obtain a set of vehicle identifications including one or more vehicle identifications

S220

An image information to be processed of a vehicle operating around an operating platform is acquired, where the operating platform is located in the operating site

S230

According to a predicted matching result between the image information to be processed and the vehicle identification in the set of vehicle identifications, a target vehicle identification of a target vehicle in the image information to be processed is recognized

FIG. 2

S230

S310

An image feature extraction is performed on the image information to be processed to obtain an image feature vector

S320

A text feature extraction is performed on the vehicle identification in the set of vehicle identifications to obtain a text feature vector

S330

The image feature vector is fused with the text feature vector based on an attention mechanism, so as to obtain an image weighted feature vector for the image information to be processed

S340

The predicted matching result for the image information to be processed is determined based on the image weighted feature vector and the text feature vector

S350

In response to the predicted matching result indicating that the image information to be processed is matched with the vehicle identification, the target information in the image information to be processed is recognized as the target vehicle identification

FIG. 3A

310

┌─ A
201XYZ

321

First image feature
extraction layer

322

Second image feature
extraction layer

331

First image feature
vector

332

Second image feature
vector

FIG. 3B

341    310

┌─ A
201XYZ

342    310

┌─ A
201XYZ

FIG. 3C

411

First image feature
vector

420

Text feature vector

412

Second image feature
vector

431

First attention layer

432

Second attention layer

441

First image weighted
feature vector

442

Second image weighted
feature vector

450

Fusion encoding layer

460

Predicted input vector

470

Prediction classification
layer

480

Predicted result

FIG. 4

S510

A training sample is acquired

S520

An initial image recognition model is trained using the training sample, so as to obtain a trained image recognition model

FIG. 5

610

Record module

620

Acquisition module

600

630

Recognition module

FIG. 6

710

Sample acquisition module

720

Training module

700

FIG. 7

FIG. 8

## INTERNATIONAL SEARCH REPORT

| International application No. |
| --- |
| **PCT/CN2022/117003** |

### A. CLASSIFICATION OF SUBJECT MATTER

G06V 20/62(2022.01)i

According to International Patent Classification (IPC) or to both national classification and IPC

### B. FIELDS SEARCHED

Minimum documentation searched (classification system followed by classification symbols)

G06V

Documentation searched other than minimum documentation to the extent that such documents are included in the fields searched

Electronic data base consulted during the international search (name of data base and, where practicable, search terms used)

CNKI, CNPAT, WPI, EPODOC: 图像, 识别, 车辆, 文本, 特征, 融合, image, recognition, identification, vehicle, text, feature, fusion

### C. DOCUMENTS CONSIDERED TO BE RELEVANT

| Category* | Citation of document, with indication, where appropriate, of the relevant passages | Relevant to claim No. |
| --- | --- | --- |
| PX | CN 114663871 A (BEIJING JINGDONG QIANSHI TECHNOLOGY CO., LTD.) 24 June 2022 (2022-06-24) description, paragraphs 5-48 | 1-14 |
| X | CN 113569874 A (GLODON COMPANY LIMITED) 29 October 2021 (2021-10-29) description, paragraphs 4-37 | 1, 8-14 |
| A | CN 113326768 A (ZHEJIANG SENSETIME TECHNOLOGY DEVELOPMENT CO., LTD.) 31 August 2021 (2021-08-31) entire document | 1-14 |
| A | WO 2014186840 A1 (FMP GROUP (AUSTRALIA) PTY LTD.) 27 November 2014 (2014-11-27) entire document | 1-14 |
| A | CN 113052159 A (CHINA MOBILE COMMUNICATIONS CORPORATION, SHAANXI CO., LTD. et al.) 29 June 2021 (2021-06-29) entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2022** | **28 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/117003**

| Patent document cited in search report | | | Publication date (day/month/year) | Patent family member(s) | | | Publication date (day/month/year) |
|---|---|---|---|---|---|---|---|
| CN | 114663871 | A | 24 June 2022 | None | | | |
| CN | 113569874 | A | 29 October 2021 | None | | | |
| CN | 113326768 | A | 31 August 2021 | None | | | |
| WO | 2014186840 | A1 | 27 November 2014 | AU | 2014271204 | A1 | 03 December 2015 |
| | | | | NZ | 630397 | A | 30 June 2017 |
| CN | 113052159 | A | 29 June 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210291917